# EUROPÄISCHE PATENTSCHRIFT

(11) **EP 1 091 199 B1**
(45) Veröffentlichungstag und Bekanntmachung des Hinweises auf die Patenterteilung: **26.11.2008**
(21) Anmeldenummer: 99119843.3
(22) Anmeldetag: 07.10.1999
(51) Int. Cl.: G01F 25/00

(54) **Verfahren und eine Vorrichtung zur Funktionsüberprüfung eines Grenzschalters**
Method and device for functional testing of a limit switch
Procédé et dispositif pour le test fonctionnel d'un interrupteur de limite

(43) Veröffentlichungstag der Anmeldung: 11.04.2001
(73) Patentinhaber: Endress + Hauser GmbH + Co. KG, 79689 Maulburg (DE)
(72) Erfinder: Lindner, Klaus-Peter, 79585 Steinen (DE); Thorn, Frank, 79688 Hausen (DE); Korsten, Klaus, 79541 Lörrach (DE)
(74) Vertreter: Andres, Angelika Maria

(56) Entgegenhaltungen:
- EP-A- 0 433 995
- EP-A- 0 446 417
- EP-A- 0 629 844
- WO-A-96/04630
- DE-A- 3 127 637
- DE-A- 4 244 761

## Beschreibung

Die Erfindung betrifft ein Verfahren zur Funktionsprüfung eines Grenzschalters, der über eine Datenbusleitung mit einer Steuereinheit verbunden ist.

In der Automatisierungs- und Prozeßsteuerungstechnik werden häufig Feldgeräte eingesetzt, die über einen Datenbus mit einer Steuereinheit verbunden sind. Über den Datenbus erfolgt die gesamte digitale Kommunikation zwischen den Feldgeräten und der Steuereinheit. Handelt es sich bei dem Feldgerät um einen Meßwertaufnehmer für eine Prozessvariable, so leitet das Feldgerät den Meßwert in digitaler Form an die Steuereinheit weiter. In der Steuereinheit wird dieser Meßwert ausgewertet und erforderlichenfalls entsprechende Steuermaßnahmen ergriffen. Hierfür werden z.B. Aktoren, die ebenfalls an den Datenbus angeschlossen sind, angesteuert.

Vielfach werden in Flüssigkeitsbehältern als Feldgeräte Grenzschalter eingesetzt, die zur Überwachung des Füllstandes dienen. Wesentlicher Bestandteil derartiger Grenzschalter ist ein Meßwertaufnehmer, der das Über- oder Unterschreiten eines bestimmten Grenzstandes erfaßt. Solche Genzschalter werden allgemein auch als Überfüllsicherungen bezeichnet. Die zuverlässige Funktion eines Grenzschalters, sowie der gesamten Datenübertragung ist wesentlich für eine sichere Prozeßsteuerung.

Je nach Gefährdungsgrad der zu überwachenden Flüssigkeit ist eine regelmäßige Funktionsprüfung des Grenzschalters notwendig bzw. gesetzlich vorgeschrieben ( BRD, Wasserhaushaltsgesetz, WHG §19). Allgemeine Informationen zu Überfüllsicherungen und deren Prüfmethoden sind der Broschüre "Überfüllsicherungen für wassergefährdende, brennbare und nichtbrennbare Flüssigkeiten", Endress+Hauser Meßtechnik GmbH+Co., Weil am Rhein, 1994, 2. Auflage, zu entnehmen.

Die einfachste Art und Weise der Funktionsprüfung eines Grenzschalters besteht darin, den Füllstand in einem Flüssigkeitsbehälter gezielt zu verändern, bis der Grenzstand über- bzw. unterschritten wird. Beim Erreichen des Grenzstandes muß der Grenzschalter "ansprechen" d.h. ein entsprechendes Alarmsignal erzeugen und an die Steuereinheit weiterleiten. In der Regel müssen aufgrund des Alarmsignals spezielle Steuermaßnahmen ausgelöst werden, z.B. die Betätigung eines Absperrventils, das zur Vermeidung einer Überfüllung den Zulauf des Flüssigkeitsbehälters unterbricht. Diese Betätigung kann entweder direkt vom Grenzschalter aus erfolgen, z.B. über ein Sicherheitsrelais oder aber über die weiter entfernt liegende Steuereinheit. Bei einer solchen Funktionsprüfung wird nicht nur der Grenzschalter an sich auf seine Funktionsfähigkeit hin überprüft, sondern die gesamte Reaktionskette, die mit der Betätigung des Absperrventils endet.
Ein gezielte Änderung des aktuellen Füllstandes auf den gewünschten Grenzfüllstand ist jedoch meist sehr aufwendig und häufig nicht praktikabel.

Eine weitere Möglichkeit der Funktionsprüfung besteht darin, einen bestimmten Füllstand elektronisch zu simulieren. Dabei wird auf den Eingang der Auswerteelektronik im Grenzschalter anstatt des Meßsignals des Meßwertaufnehmers ein bestimmtes Testsignal gegeben. Für alle Komponenten, die dem Meßwertaufnehmer nachgeschaltet sind ( Auswerteelektronik bis hin zur Steuereinheit) ist nicht erkennbar, daß es sich bei dem Testsignal um ein elektronisch erzeugtes Signal handelt. Deshalb muß auch in diesem Fall der Grenzschalter ein Alarmsignal erzeugen und die gesamte Reaktionskette entsprechend ablaufen.

In der DE-3127637 ist ein Grenzschalter mit einen kapazitiven Meßwertaufnehmer beschrieben. Der Grenzschalter ist über eine sogenannte 2-Drahtleitung mit einer Auswerteeinheit verbunden. Die 2-Drahtleitung dient einerseits zur Spannungsversorgung des Grenzschalters und gleichzeitig auch zur Signalübertragung vom Grenzschalter zur Auswerteeinheit. Hierbei erfolgt die Funktionsprüfung manuell durch die Bedienung eines entsprechenden Schalters in der 2-Drahtleitung, der die Spannungsversorgung des Grenzschalters unterbricht.

Aus der EP-433995 ist ein weiterer Grenzschalter bekannt, bei dem die Funktionsprüfung ebenfalls über einen manuell zu bedienenden Schalter durch Kurzschließen der Versorgungsspannung ausgelöst wird.
Aus der DE-4244761 ist ein weiterer Grenzschalter bekannt, bei dem die Funktionsprüfung durch einen kurzen Stromimpuls auf der Versorgungsleitung ausgelöst wird.
Dem Dokument EP-0 446 417 ist eine Anordnung zur Messung einer Flüssigkeitsmenge mit einer Sonde und einer Auswerteschaltung zu entnehmen, in welcher ein Mikrocomputer der Auswerteschaltung ein Umschalten der Anordnung in unterschiedliche Betriebsarten erlaubt. Bei einem Abgleich wird bei einem vorgegebenen Füllstand das Messergebnis der Anordnung mit einem Sollwert verglichen und ein Korrekturwert erzeugt. In einer weiteren Ausgestaltung lassen sich Fehlermeldungen aus einem Register der Messanordnung auslesen. Bei einer Überprüfung der Auswerteschaltung wird von einer Abgleich- und Prüfeinrichtung der Auswerteschaltung eine Eingangsspannung vorgegeben.
Das Dokument WO-96/04630 beschreibt ein Instrumenten-System, in welchem ein Sensor am Messort über einen bidirektionalen Kommunikationskanal mit einem entfernt angeordneten Empfänger der Messdaten verbunden ist. Bei einem Test des Sensors wird von einem Testsignal-Generator im Empfänger ein Testsignal erzeugt und über den Kommunikationskanal auf den Sensor gegeben.

Das Auslösung einer Funktionsprüfung manuell am Grenzschalter selbst ist sehr aufwendig, insbesondere wenn die Prozeßanlage mehrere zu überprüfende Grenzschalter umfaßt, die jeweils einzeln vom Bedienungspersonal aufgesucht werden müssen.
Ein weiterer Nachteil dieser Methode besteht in der aufwendigen Protokollierung. Die Protokollierung kann nur von Hand vor Ort am Grenzschalter selbst erfolgen.
Da Funktionsprüfungen in regelmäßigen zeitlichen Abständen wiederholt werden sollten/müssen, besteht die Gefahr, daß die Zeitabstände nicht eingehalten werden und eventuell anstehende Funktionsprüfungen gar nicht durchgeführt werden.

Aufgabe der Erfindung ist es ein Verfahren zur Funktionsprüfung eines Grenzschalters anzugeben, das die oben genannten Nachteile nicht aufweist, das insbesondere einfach durchführbar ist.

Gelöst wird diese Aufgabe durch ein Verfahren mit den Merkmalen des Anspruchs 1.

In einer bevorzugten Ausgestaltung der Erfindung wird das Ergebnis des Selbsttests in einem Fehlerspeicher der Steuereinheit abgespeichert.

In einer bevorzugten Ausgestaltung der Erfindung wird der Selbsttest in regelmäßigen zeitlichen Abständen von der Steuerungseinheit ausgelöst.

In einer bevorzugten Ausgestaltung der Erfindung werden die regelmäßigen zeitlichen Abstände über einen in der Steuerungseinheit abgespeicherten Kalender bestimmt.

In einer bevorzugten Ausgestaltung der Erfindung ist der Selbsttest Bestandteil einer Initialisierungs-Routine eines im Grenzschalters angeordneten Mikroprozessors.

In einer bevorzugten Ausgestaltung der Erfindung ist der Mikroprozessor mit einem Reset-Baustein verbunden, der über die Steuereinheit ansteuerbar ist.

In einer weiteren bevorzugten Ausgestaltung der Erfindung ist der Grenzschalter über einen Meßumformer mit dem Datenbus verbunden.

In einer bevorzugten Ausgestaltung der Erfindung ist der Grenzschalter über eine 2-Drahtleitung mit dem Meßumformer verbunden

In einer bevorzugten Ausgestaltung der Erfindung ist der Grenzschalter über eine 2-Drahtleitung (4-20mA) mit dem Meßumformer verbunden.

In einer bevorzugten Ausgestaltung der Erfindung ist der Grenzschalter über eine 2-Drahtleitung (4-20mA) mit zusätzlicher digitalen Signalübertragung mit dem Meßumformer verbunden.

In einer bevorzugten Ausgestaltung der Erfindung erfolgt die digitale Signalübertragung mittels eines FSK-Verfahrens (frequency shift keying).

In einem alternativen bevorzugten Ausführungsbeispiel erfolgt die digitale Signalübertragung mittels eines PFM-Verfahrens (puls frequency modulation).

In einer bevorzugten Ausgestaltung der Erfindung erfolgt der Start der Initialisierungs-Routine durch das Kurzschließen der Versorgungsspannung des Grenzschalters.

In einer bevorzugten Ausgestaltung der Erfindung handelt es sich bei dem Grenzschalter um einen Füllstandsgrenzschalter.

In einer bevorzugten Ausgestaltung der Erfindung handelt es sich bei dem Füllstandsgrenzschalter um einen Schwingabel-Grenzschalter

In einem weiteren bevorzugten Ausführungsbeispiel arbeitet der Grenzschalter nach dem Echo-Prinzip.

Gegenstand der Erfindung ist auch ein Grenzschalter.

Die wesentliche Idee der Erfindung besteht darin, zur Funktionsprüfung einen Selbsttest im Grenzschalter von einer Steuereinheit aus auszulösen. Hierzu wird ein entsprechender Testbefehl von der Steuereinheit zum Grenzschalter über die Datenbusleitung gesendet.

Dadurch muß die Funktionsprüfung nicht mehr manuell vor Ort am Sensor selbst erfolgen, sondern kann von der Steuereinheit aus ausgelöst werden.

Nachfolgend ist die Erfindung anhand zweier in der Zeichnung dargestellten bevorzugten Ausführungsbeispiele näher erläutert. Es zeigen:
- Fig.1: schematische Darstellung eines Datenbussystems,
- Fig.2: schematische Darstellung eines ersten Ausführungsbeispiels mit einem Grenzschalter, der direkt am Datenbus angeschlossen ist,
- Fig.3: schematische Darstellung eines zweiten Ausführungsbeispiels mit einem Grenzschalter, der über einen Meßumformer am Datenbus angeschlossen ist.

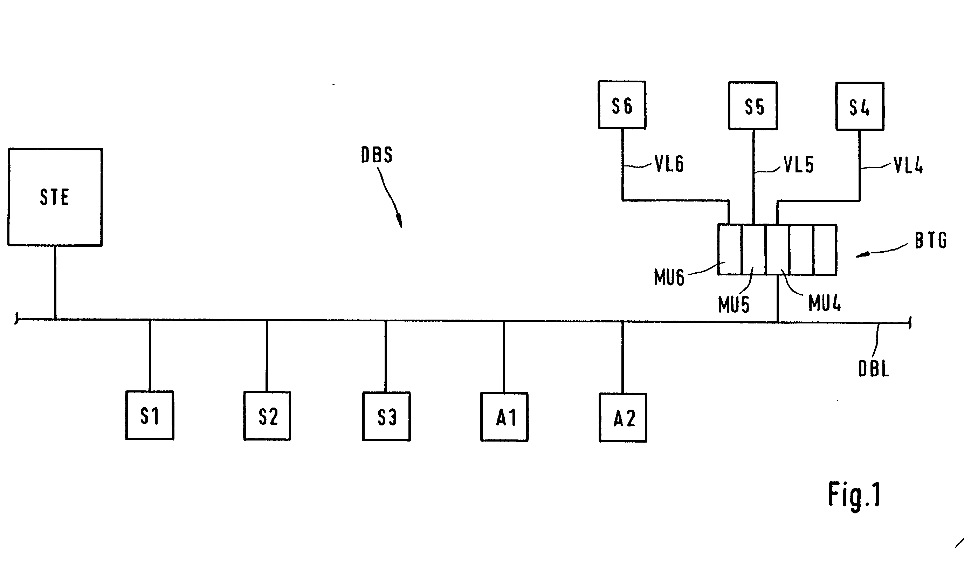

Das in Fig. 1 dargestellte Datenbussystem DBS weist eine Steuereinheit STE auf, die über eine Datenbusleitung DBL mit mehreren Sensoren S1-S6, sowie zwei Aktoren A1, A2 verbunden ist. Die Datenübertragung auf der Datenbusleitung DBL kann z.B. elektrisch oder optisch erfolgen. Bei der Steuereinheit STE kann es sich z.B. um ein Prozeßleitsystem, einen Kleinrechner (PC) oder eine speicherprogrammierbare Steuerung (SPS) handeln. Die Steuereinheit STE stellt somit ganz allgemein eine frei programmierbare Hardwareplattform dar.
Die Kommunikation zwischen Steuereinheit STE und den auch als Datenbusteilnehmern bezeichneten Sensoren S1-S6 bzw. Aktoren A1, A2 erfolgt auf der Datenbusleitung DBL in digitaler Weise.
Die drei Sensoren S4-S6 weisen jeweils eine Versorgungsleitung VL4-VL6 auf, die über einen zugehörigen Meßumformer MU4-MU6 mit dem Datenbus DBL verbunden ist. In vorteilhafter Weise sind die Meßumformer MU4-MU6 als 19-Zoll-Einschub-Einheiten ausgebildet, die in einem entsprechenden Baugruppenträger BGT (19" Rack) angeordnet sind.
Jede Versorgungsleitung VL kann im Prinzip für eine unterschiedliche Techniken ausgebildet sein, z.B. 4-Draht-Technik oder 2-Draht-Technik. Bei 4-Draht-Technik erfolgt die Spannungsversorgung des angeschlossenen Sensors und die Datenübertragung getrennt auf getrennten Leitungspaaren. Bei 2-Draht-Technik erfolgen Spannungsversorgung und Signalübertragung auf einem gemeinsamen Leitungspaar.
Es ist auch denkbar, daß die Versorgungsleitung VL nur zur Signalübertragung dient und die Spannungsversorgung getrennt z.B. über eine 220V oder einen 360V Netz-Anschluß erfolgt.

Die Signalübertragung zwischen Meßumformer MU4-MU6 und Sensor S4-S6 kann in bekannter Weise z.B. über eine 4-20mA Stromschleife oder in Namur-Technik erfolgen. Zusätzliche Daten können auf dieser Stromschleife im PFM-Verfahren (puls frequency modulation) oder im FSK-Verfahren (frequency shift keying) übertragen werden. Ein Beispiel für das FSK-Verfahren ist das Hart-Protokoll der Hart Foundation.
Die Meßumformer MU4-MU6 dienen somit einerseits zur Spannungsversorgung der angeschlossenen Sensoren S4-S6, sowie zur Adaption der Datenübertragung zwischen den unterschiedlichen Übertragungsstandards auf der Datenbusleitung DBL und den Versorgungsleitungen VL4-VL6.
Für die Erfindung ist es unwesentlich für welchem Standard (z.B. Profibus, Fieldbus-Foundation) das Datenbussystem DBS ausgelegt ist.

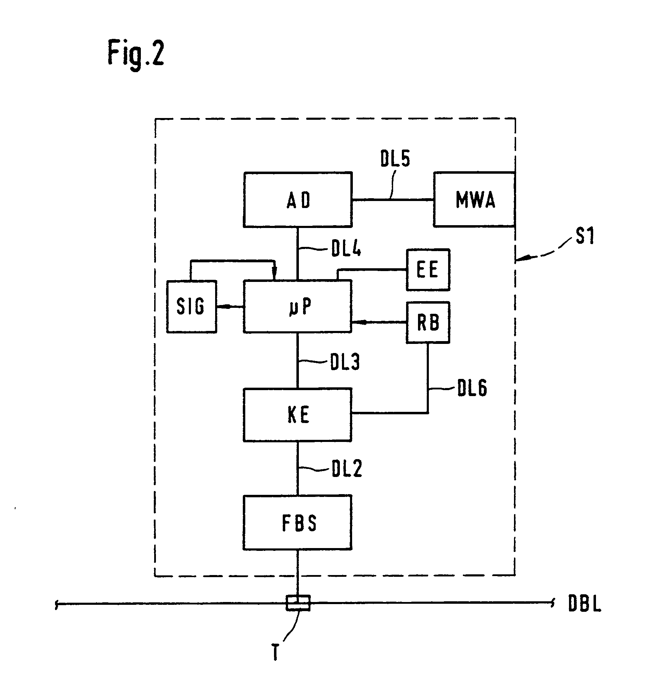

In Fig. 2 ist beispielhaft der als Grenzschalter dienende Sensor S1 dargestellt, der direkt an die Datenbusleitung DBL angeschlossen ist. Der Anschluß erfolgt über einen T-Koppler T, der über eine Datenleitung DL1 mit einer Feldbusschnittstelle FBS verbunden ist. Bei der Feldbusschnittstelle FBS kann es sich z.B. im der Baustein SIM1 der Fa. Siemens handeln. Die Feldbusschnittstelle FBS unterstützt alle Sende- und Empfangsfunktionen entsprechend der eingesetzten Übertragungstechnik. Von der Feldbusschnittstell FSB führt eine Datenleitung DL2 zu einer Kommunikationseinheit KE, die über die Datenbusleitung DBL gesendeten Telegramme liest bzw. selbst Telegramme sendet.
Die Kommunikationseinheit KE ist über eine Datenleitung DL3 mit einem Mikroprozessor µP und über eine Datenleitung DL6 mit einem Reset-Baustein RB verbunden. Neben dem Reset-Baustein RB ist noch ein EEPROM EE als nichtflüchtiger Speicher an den Mikroprozessor µP angeschlossen. Vom Mikroprozessor µP führt eine weitere Datenleitung DL4 zu einem A/D-Wandler AD, der mit einem Meßwertaufnehmer MWA über eine Datenleitung DL5 verbunden ist.
Weiterhin führt vom Mikroprozessor µP eine Steuerleitung zu einem Signalgenerator SIG, der ein Signal erzeugt, das dem Signal des A/D-Wandlers AD entspricht, wenn der Meßwertaufnehmer MWA einen bestimmten Grenzstand detektiert.

Der Meßwertaufnehmer MWA erfaßt den Füllstand als analoges Meßsignal, welches im A/D-Wander AD in ein digitales Signal umgewandelt wird und im Mikroprozessor µP ausgewertet wird. Den Ergebniswert gibt der Mikroprozessor an die Kommunikationseinheit KE weiter, die den Ergebniswert in ein entsprechendes Sendetelegramm integriert. Fordert z.B. die Steuereinheit STE den aktuellen Meßwert des Grenzschalters S1 an, so übergibt die Kommunikationseinheit KE das Sendetelegramm mit dem aktuellen Ergebniswert an die Feldbusschnittstelle FBS, von der aus das Sendetelegramm über die Datenbusleitung zur Steuereinheit STE gelangt, wo eine Auswertung des aktuellen Ergebniswerts erfolgt. Je nach Ausgang der Auswertung werden entsprechende Aktoren angesteuert.

Zur Funktionsprüfung sendet die Steuereinheit STE einen entsprechenden Testbefehl an den Grenzschalter S1. Anstelle des Signals des A/D-Wandlers wird nun das Signal des Signalgenerators SIG, das einem bestimmten Grenzstand entspricht, im Mikroprozessor µP ausgewertet.

Der Mikroprozessor pP muss dies erkennen und ein entsprechendes Alarmsignal an die Steuereinheit STE senden. Nur wenn die Steuereinheit STE das Alarmsignal erhält, wird die Funktionsprüfung als bestanden gewertet.

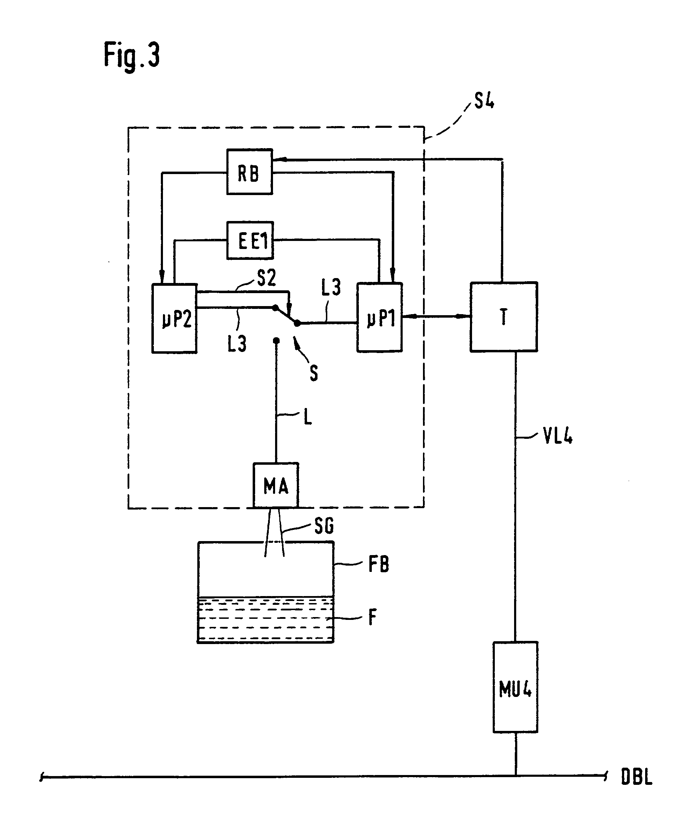

In Fig. 3 ist beispielhaft als Grenzschalter der Sensor S4 dargestellt, der über den Meßumformer MU4 mit der Datenbusleitung DBL verbunden ist. Der Sensor S4 arbeitet nach dem Schwinggabel-Prinzip. Eine derartige Vorrichtung ist in der eigenen Patentanmeldung DE-OS 4203967 "Vorrichtung zur Feststellung und/oder Überwachung eines vorbestimmten Füllstands in einem Behälter" beschrieben. Deshalb wird auf die Funktionsweise insbesondere der Schwingungsanregung der Schwinggabel des Grenzschalters nicht näher eingegangen.
Die wesentlichen Elemente des Sensors S4 sind zwei Mikroprozessoren µP 1 und µP 2, ein Meßwertaufnehmer MA mit Schwinggabel SG, sowie ein Transmitter T. Die Schwinggabel SG ragt in einen Flüssigkeitsbehälter FB, der mit einer Flüssigkeit F gefüllt ist.
Die beiden Mikroprozessoren µP 1 und µP 2 sind mit einem gemeinsamen EEPROM EE1 verbunden. Der Mikroprozessor µP 2 ist über eine Steuerleitung S2 und eine Leitung L2 mit einem Schalter S verbunden, der seinerseits mit dem Mikroprozessor µP 1 über die Leitung L3 und dem Meßaufnehmer MA über die Leitung L verbunden ist.
An den Mikroprozessor µP 2 ist noch ein Oszillator O angeschlossen. Über einen Reset-Baustein RB kann ein Reset-Befehl für die beiden Mikroprozessoren µP 1 und µP 2 erzeugt werden. Der Reset-Baustein RB überwacht die Spannungsversorgung U₀ des Sensors S4. Bei einer längeren Spannungsunterbrechung wird ein Reset-Befehl gegeben.

Der Sensor S4 funktioniert wie folgt. Die Schwinggabel SG des Meßaufnehmers MA wird in bekannter Weise auf ihrer Resonanzfrequenz angeregt. Die Schwingungsfrequenz der Schwinggabel hängt davon ab, ob sie in Luft frei schwingt oder vom Medium, der Flüssigkeit F, bedeckt ist. Das vom Meßaufnehmer kommende Frequenzsignal wird im Mikroprozessor µP 1 ausgewertet und ein entsprechendes Signal (frei/bedeckt) an den Transmitter T weitergegeben. Der Transmitter T wandelt dieses Signal in ein entsprechendes PFM-Signal um, das über die 2-Draht-Leitung VL4 den Meßumformer MU4 erreicht. Hier wird das Signal in ein Sendetelegramm umgesetzt und zur Steuereinheit STE geschickt.

Für einen einfachen Selbsttest steuert der Mikroprozessor µP 2 den Schalter S an, so daß anstatt des Frequenzsignals vom Meßaufnehmer MA, ein vom Mikroprozessor µP2 künstlich erzeugtes Meßsignal, das einer bedeckten Schwinggabel entspricht, dem Mikroprozessor µP 1 zugeführt wird. Der Mikroprozessor µP 1 wertet diese Frequenzsignal aus und erkennt, daß eine "bedeckte" Schwinggabel vorliegt. Dieses Signal "bedeckt" wird über den Transmitter T und den Meßumformer MU4 an die Steuereinheit STE weitergegeben.

Ausgelöst wird der Selbsttest jeweils durch einen Testbefehl den die Steuereinheit STE an den Sensor S1 sendet. Sind mehrere Grenzschalter am Datenbussystem vorhanden, so schickt die Steuereinheit STE an jeden der Grenzschalter einen entsprechenden Testbefehl. Somit kann in einfacher Weise eine Funktionsprüfung für mehrere Grenzschalter nacheinander oder auch gleichzeitig durchgeführt werden.
Beim Sensor S1 wird der Mikroprozessor µP direkt über den Testbefehl angesteuert, bei dem Sensor S4 über den entsprechenden Meßumformer MU.

Zur Kontrolle ob der entsprechende Grenzschalter Sensor S1 bzw. Sensor S4 ordnungsgemäß funktioniert, wird das Ergebnis des Selbsttests von der Steuereinheit STE überwacht. D.h. die Steuereinheit STE überprüft das Signal des entsprechenden Grenzschalters auf Richtigkeit. Gibt der Grenzschalter beim Selbsttest das gewünschte Signal ab, so wird die Funktionskontrolle als bestanden gewertet. Im anderen Fall wird die Funktionskontrolle als nicht bestanden gewertet. In diesem Fall ist der Grenzschalter fehlerhaft und muß eventuell ausgetauscht werden. Das Ergebnis des Selbsttest wird in der Steuereinheit STE angezeigt, um entsprechende Maßnahmen ergreifen zu können.

Zur späteren Kontrolle wird das Ergebnis des Selbsttests (bestanden/nicht bestanden) in einem Fehlerspeicher der Steuereinheit STE abgespeichert. Damit ist eine einfache zeitliche Zurückverfolgung auch früher durchgeführter Selbsttests möglich, insbesondere wenn Datum und Uhrzeit mit abgespeichert werden.

Da eine regelmäßige Funktionsprüfung von Grenzschaltern teilweise gesetzlich vorgeschrieben ist, wird das Testsignal für den entsprechenden S1 bzw. S4 in regelmäßigen zeitlichen Abständen in der Steuereinheit STE erzeugt.

In vorteilhafter Weise ist in der Steuereinheit STE ein Kalender abgespeichert, der die regelmäßigen zeitlichen Abstände bestimmt. Somit ist eine Funktionsprüfung z.B. monatlich durchführbar.

In vorteilhafter Weise ist der Selbsttest auch Bestandteil einer Initialisierungsroutine, die beim Programmstart des Mikroprozessors µP (bzw. µP 1) automatisch aufgerufen wird. Damit kann der Selbsttest durch einen erzwungenen Programmstart des Mikroprozessors µP (bzw. µP 1) ausgelöst werden.
In vorteilhafter Weise ist der Mikroprozessor µP (bzw. µP 1) mit einem Reset-Baustein RB verbunden, der über den Testbefehl direkt ansteuerbar ist. Der Testbefehl löst somit direkt einen Reset-Befehl für den Mikroprozessor µP bzw. µP 1 aus.

Viele Grenzschalter sind nicht direkt mit einem Datenbus verbunden, sondern indirekt wie der Sensor S4 über einen Meßumformer MU. Der Testbefehl wird deshalb von der Steuereinheit STE an den Meßumformer MU4 gesendet, der in geeigneter Weise einen Selbsttest des angeschlossenen Grenzschalters S4 auslöst.

In einfacher Weise kann das Auslösen durch Kurzschließen der Versorgungsspannung des Sensors S4 erfolgen. Hierzu ist ein entsprechender Schalter im jeweiligen Meßumformer MU4 vorgesehen.

In einer bevorzugten Ausgestaltung der Erfindung ist der Sensor S4 über eine 2-Drahtleitung mit dem Meßumformer MU4-MU6 verbunden.

In einer bevorzugten Ausgestaltung der Erfindung handelt es sich bei der 2-Drahtleitung um eine 4-20mA Stromschleife.

In einer bevorzugten Ausgestaltung der Erfindung werden über die 4-20mA 2-Drahtleitung zusätzliche digitale Signale übertragen.

Diese Signalübertragung kann z.B. mittels eines FSK-Verfahrens (frequency shift keying) oder mittels eines PFM-Verfahrens (puls frequency modulation) erfolgen.

Besonders einfach läßt sich das erfindungsgemäße Verfahren auf einen Grenzschalter der nach dem Schwinggabel-Prinzip arbeitet. Beim Selbsttest wird im Mikroprozessor µP 2 eine Bedeckt-Frequenz erzeugt, die auf den Signaleingang SE des Mikroprozessors µP 1 gegeben wird.

Bei einem nach dem Echo-Verfahren arbeitenden Grenzschalter, wird ein künstliches Echo-Signal erzeugt, das einem bestimmten Füllstand entspricht.

Dieses Echo-Signal wird auf den Signaleingang der Auswerteelektronik gegeben.
Es ist auch denkbar das erfindungsgemäße Verfahren nicht nur bei Datenbussystemen, wo eine gezielte Kommunikation zwischen einer Steuereinheit und einzelnen Sensoren möglich ist, anzuwenden, sondern auch bei Sensoren, die über Funk (z.B. CB-Funk) mit einer Steuereinheit verbunden sind. In diesem Fall ist die Datenbusleitung DBL überflüssig und die Kommunikation erfolgt mittels Funkbefehlen.
Weiterhin ist auch denkbar das erfindungsgemäße Verfahren nicht nur auf Grenzschalter anzuwenden, sondern allgemein auf Bauelemente, die über einen Datenbus mit einer Steuereinheit kommunizieren und die einer wiederkehrenden Prüfung unterliegen so z.B. beliebige Sensoren, Sicherheitsventile, Sicherheitsservoantriebe, Lichtschranken etc.

Selbstverständlich muß auch eine manuelle Auslösung des Selbsttests von der Steuereinheit aus möglich sein. Dies kann entweder durch einen Druckknopf oder durch eine entsprechende Programmroutine erfolgen.

Bei dem erfindungsgemäßen Verfahren zur Funktionsprüfung des Grenzschalters S1 bzw. S4 wird von der Steuereinheit STE aus ein Testbefehl über die Datenbusleitung DBL zum Grenzschalter S1 bzw. S4 gesendet. Dieser Testbefehl löst im Grenzschalter S1 bzw. S4 einen elektronischen Selbsttest aus, dessen Ergebnis von der Steuereinheit STE überwacht wird. Dadurch ist eine einfache regelmäßige Funktionsprüfung gewährleistet.

## Patentansprüche

1. Verfahren zur Funktionsprüfung eines Grenzschalters (S1, S4), der über eine Datenbusleitung (DBL) mit einer Steuereinheit (STE) verbunden ist,
wobei die Steuereinheit (STE) einen Testbefehl an den Grenzschalter (S1, S4) sendet, der im Grenzschalter (S1, S4) einen elektronischen Selbsttest auslöst, dessen Ergebnis von der Steuereinheit (STE) überwacht wird,
wobei im Selbsttest im Grenzschalter (S1, S4) ein Messsignal künstlich erzeugt und im Grenzschalter (S1, S4) ausgewertet wird,
wobei von dem Grenzschalter (S1, S4) ausgehend von der Auswertung des künstlich erzeugten Messsignals ein Signal an die Steuereinheit (STE) gesendet wird,
und
wobei von der Steuereinheit (STE) das gesendete Signal auf seine Richtigkeit überprüft wird.

2. Verfahren nach Anspruch 1 bei dem das Ergebnis des Selbsttests in einem Fehlerspeicher der Steuereinheit (STE) abgespeichert wird.

3. Verfahren nach einem der vorhergehenden Ansprüche bei dem der Selbsttest in regelmäßigen zeitlichen Abständen von der Steuereinheit (STE) ausgelöst wird.

4. Verfahren nach Anspruch 3 bei dem die regelmäßigen zeitlichen Abstände über einen in der Steuerungseinheit (STE) abgespeicherten Kalender bestimmt werden.

5. Verfahren nach einem der vorhergehenden Ansprüche bei dem der Selbsttest Bestandteil einer Initialisierungs-Routine eines im Grenzschalter (S1, S4) angeordneten Mikroprozessors (µP, µP1) ist.

6. Verfahren nach Anspruch 5 bei dem die Steuereinheit (STE) zur Auslösung eines Selbsttests einen Resetbaustein (RB) ansteuert, der mit dem Mikroprozessor (µP, µP1) verbunden ist.

7. Verfahren nach einem der vorhergehenden Ansprüche bei dem der Testbefehl über die Datenbusleitung (DBL) und einen Meßumformer (MU4) zum Grenzschalter (S4) gelangt.

8. Verfahren nach Anspruch 7 bei dem der Testbefehl eine über eine 2-Drahtleitung (VL4) zum Grenzschalter (S4) gelangt.

9. Verfahren nach Anspruch 7 bei dem die 2-Drahtleitung (VL4) in 4-20mA Technik ausgelegt ist.

10. Verfahren nach einem der Ansprüche 7-9 bei dem über die 2-Drahtleitung (VL4) zusätzliche digitale Signale übertragen werden.

11. Verfahren nach Anspruch 10 bei dem die digitale Signalübertragung mittels eines FSK-Verfahrens (frequency shift keying) erfolgt.

12. Verfahren nach Anspruch 10 bei dem die digitale Signalübertragung mittels eines PFM-Verfahrens (puls frequency modulation) erfolgt.

13. Verfahren nach einem der vorhergehenden Ansprüche bei dem die Initialisierungs-Routine durch das Kurzschließen der Versorgungsspannung des Grenzschalters (S4) ausgelöst wird.

14. Verfahren nach einem der vorhergehenden Ansprüche bei dem der Grenzschalter (S1, S4) ein Füllstandsgrenzschalter ist.

15. Verfahren nach Anspruch 14 bei dem der Grenzschalter (S1, S4) ein Schwingabel-Grenzschalter ist.

16. Verfahren nach einem der Ansprüche 1- 14 bei dem der Grenzschalter (S1) nach dem Echo-Prinzip arbeitet.

17. Grenzschalter (S1, S4),
welcher über eine Datenbusleitung (DBL) oder über Funk mit einer Steuereinheit (STE) verbindbar ist,
welcher einen Mikroprozessor (µP2) oder einen Signalgenerator (SIG) aufweist,
wobei der Mikroprozessor (µP2) oder der Signalgenerator (SIG) im Fall eines Selbsttests des Grenzschalters (S1, S4) ein künstliches, einem Grenzstand entsprechendes Messsignal erzeugt,
und
welcher in dem Fall, dass er von der Steuereinheit (STE) einen Testbefehl erhält, einen Selbsttest ausführt,
wobei im Fall des Selbsttests der Mikroprozessor (µP2) oder der Signalgenerator (SIG) das künstlich erzeugte Messsignal erzeugt, welches,der Grenzschalter (S1, S4) auswertet,
und
wobei im Fall des Selbsttests der Grenzschalter (S1, S4) ausgehend von der Auswertung des künstlich erzeugten Messsignals ein Signal an die Steuereinheit (STE) sendet.

18. Grenzschalter (S1, S4) nach Anspruch 17,
**dadurch gekennzeichnet,**
**dass** der Grenzschalter (S4) über einen Messumformer (MU4) mit der Datenbusleitung (DBL) verbindbar ist.

19. Grenzschalter (S1, S4) nach Anspruch 17,
**dadurch gekennzeichnet,**
**dass** der Grenzschalter (S1, S4) ein Füllstandsgrenzschalter ist.

20. Grenzschalter (S1, S4) nach Anspruch 17,
**dadurch gekennzeichnet,**
**dass** der Grenzschalter (S1, S4) ein Schwinggabel-Grenzschalter ist oder dass der Grenzschalter (S1, S4) nach dem Echoverfahren arbeitet.

## Claims

1. Process for checking the function of a limit switch (S1, S4) which is connected to a control unit (STE) via a databus cable (DBL), where the control unit (STE) sends a test command to the limit switch (S1, S4) which triggers an electronic self-test in the limit switch (S1, S4), the result of which is monitored by the control unit (STE). During the self-test, a measuring signal is generated artificially in the limit switch (S1, S4) and evaluated in the limit switch (S1, S4). Based on the evaluation of the measuring signal generated artificially, the limit switch (S1, S4) sends a signal to the control unit (STE). The control unit (STE) checks this transmitted signal to see whether it is correct.

2. Process as per Claim 1, where the result of the self-test is stored in an error memory of the control unit (STE).

3. Process as per one of the previous claims, where the self-test is triggered by the control unit (STE) at regular intervals.

4. Process as per Claim 3, where the regular intervals are determined by a calendar stored in the control unit (STE).

5. Process as per one of the previous claims, where the self-test is a part of the initialization routine of a microprocessor (µP, µP1) arranged in the limit switch (S1, S4).

6. Process as per Claim 5, where the control unit (STE) activates a reset module (RB) to trigger a self-test, said reset module being connected to the microprocessor (µP, µP1).

7. Process as per one of the previous claims, where the test command is transmitted to the limit switch (S4) via the databus cable (DBL) and a transmitter (MU4).

8. Process as per Claim 7, where the test command is transmitted to the limit switch (S4) by means of a two-wire cable (VL4).

9. Process as per Claim 7, where the two-wire cable (VL4) has a 4-20 mA design.

10. Process as per one of the Claims 7-9, where additional digital signals are transmitted via the two-wire cable (VL4).

11. Process as per Claim 10, where digital signal transmission takes place by means of a frequency shift keying process.

12. Process as per Claim 10, where digital signal transmission takes place by means of a pulse frequency modulation process.

13. Process as per one of the previous claims, where the initialization routine is triggered by shorting the supply voltage of the limit switch (S4).

14. Process as per one of the previous claims, where the limit switch (S1, S4) is a level limit switch.

15. Process as per Claim 14, where the limit switch (S1, S4) is a tuning fork limit switch.

16. Process as per one of the Claims 1-14, where the limit switch (S1) works based on the echo principle.

17. Limit switch (S1, S4) which can be connected to a control unit (STE) by means of a databus cable (DBL) or via wireless technology,
- which exhibits a microprocessor (µP2) or a signal generator (SIG), whereby the microprocessor (µP2) or the signal generator (SIG) generates an artificial measuring signal, which corresponds to a limit level, if the limit switch (S1, S4) performs a self-test,
and
- which performs a self-test if it receives a test command from the control unit (STE), whereby in the event of a self-test, the microprocessor (µP2) or the signal generator (SIG) generates the measuring signal, which is created artificially and which is evaluated by the limit switch (S1, S4) and
- where, in the event of a self-test, the limit switch (S1, S4) sends a signal to the control unit (STE) based on the evaluation of the measuring signal generated artificially.

18. Limit switch (S1, S4) as per Claim 17, **characterized in that** the limit switch (S4) can be connected to the databus cable (DBL) by means of a transmitter (MU4).

19. Limit switch (S1, S4) as per Claim 17, **characterized in that** the limit switch (S1, S4) is a level limit switch.

20. Limit switch (S1, S4) as per Claim 17, **characterized in that** the limit switch (S1, S4) is a tuning fork limit switch, or that the limit switch (S1, S4) works based on the echo process.

## Revendications

1. Procédé destiné au contrôle de fonctionnement d'un détecteur de niveau (S1, S4), qui est relié par l'intermédiaire d'une ligne de bus de données (DBL) avec une unité de commande (STE), l'unité de commande (STE) envoyant une commande de test au détecteur de niveau (S1, S4), qui déclenche un auto-test électronique dans le détecteur de niveau (S1, S4), dont le résultat est surveillé par l'unité de commande (STE), lors de l'auto-test effectué au sein du détecteur de niveau (S1, S4), un signal de mesure étant généré artificiellement et interprété dans le détecteur de niveau (S1, S4), un signal étant émis à l'unité de commande (STE) par le détecteur de niveau (S1, S4) sur la base de l'interprétation du signal de mesure généré artificiellement,
et
le signal émis étant contrôlé par l'unité de commande (STE) quant à sa conformité.

2. Procédé selon la revendication 1, pour lequel le résultat de l'auto-test est enregistré dans une mémoire de défauts de l'unité de commande (STE).

3. Procédé selon l'unes des revendications précédentes, pour lequel l'auto-test est déclenché à intervalles réguliers par l'unité de commande (STE).

4. Procédé selon la revendication 3, pour lequel les intervalles réguliers sont définis par l'intermédiaire d'un calendrier enregistré dans l'unité de commande (STE).

5. Procédé selon l'unes des revendications précédentes, pour lequel l'auto-test fait partie intégrante d'un sous-programme d'initialisation d'un microprocesseur (µP, µP1) disposé dans le détecteur de niveau (S1, S4).

6. Procédé selon la revendication 5, pour lequel l'unité de commande (STE) pilote un module d'initialisation (RB) destiné au déclenchement d'un auto-test, lequel module est relié avec le microprocesseur (µP, µP1).

7. Procédé selon l'unes des revendications précédentes, pour lequel la commande de test parvient au détecteur de niveau (S4) par l'intermédiaire de la ligne de bus de données (DBL) et un transmetteur (MU4).

8. Procédé selon la revendication 7, pour lequel la commande de test parvient au détecteur de niveau (S4) par l'intermédiaire d'un câble bifilaire (VL4).

9. Procédé selon la revendication 7, pour lequel le câble bifilaire (VL4) est conçu en technique 4-20 mA.

10. Procédé selon l'une des revendications 7 à 9, pour lequel des signaux numériques supplémentaires sont transmis par l'intermédiaire du câble bifilaire.

11. Procédé selon la revendication 10, pour lequel la transmission de signal numérique est réalisée au moyen d'un procédé FSK (par déplacement de fréquence).

12. Procédé selon la revendication 10, pour lequel la transmission de signal numérique est réalisée au moyen d'un procédé PFM (par modulation d'impulsions en fréquence).

13. Procédé selon l'unes des revendications précédentes, pour lequel le sous-programme d'initialisation est déclenché par le court-circuitage de la tension d'alimentation du détecteur de niveau (S4).

14. Procédé selon l'unes des revendications précédentes, pour lequel le détecteur de niveau (S1, S4) est un détecteur de niveau de remplissage.

15. Procédé selon la revendication 14, pour lequel le détecteur de niveau (S1, S4) est un détecteur de niveau à fourchette vibrante.

16. Procédé selon l'unes des revendications 1 à 14, pour lequel le détecteur de niveau (S1) fonctionne d'après le principe de l'écho.

17. Détecteur de niveau (S1, S4),
lequel peut être relié à une unité de commande (STE) par l'intermédiaire d'une ligne de bus de données (DBL) ou via une liaison radio, lequel comporte un microprocesseur (µP2) ou un générateur de signaux (SIG), le microprocesseur (µP2) ou le générateur de signaux (SIG) générant, dans le cas d'un auto-test du détecteur de niveau (S1, S4), un signal de mesure artificiel correspondant à un niveau limite,
et
lequel reçoit dans ce cas une commande de test par l'unité de commande (STE), et exécute un auto-test,
le microprocesseur (µP2) ou le générateur de signaux (SIG) générant, dans le cas de l'auto-test, le signal de mesure généré artificiellement, lequel interprète le détecteur de niveau (S1, S4),
et
un signal étant émis, dans le cas de l'auto-test du détecteur de niveau (S1, S4), à l'unité de commande (STE) sur la base de l'interprétation du signal de mesure généré artificiellement.

18. Détecteur de niveau (S1, S4) selon la revendication 17,
**caractérisé en ce**
**que** le détecteur de niveau (S4) peut être relié à la ligne de bus de données (DBL) par l'intermédiaire d'un transmetteur (MU4).

19. Détecteur de niveau (S1, S4) selon la revendication 17,
**caractérisé en ce**
**que** le détecteur de niveau (S1, S4) est un détecteur de niveau de remplissage.

20. Détecteur de niveau (S1, S4) selon la revendication 17,
**caractérisé en ce**
**que** le détecteur de niveau (S1, S4) est un détecteur de niveau à fourchette vibrante ou que le détecteur de niveau (S1, S4) fonctionne d'après le principe de l'écho.
